# FASCICULE DE BREVET EUROPEEN

(11) **EP 3 544 760 B1**
(45) Date de publication et mention de la délivrance du brevet: **25.11.2020**
(21) Numéro de dépôt: 16810061.8
(22) Date de dépôt: 23.11.2016
(51) Int. Cl.: B23K 26/03, B21C 43/04, B08B 7/00, B21B 45/04, B23K 26/08, B23K 26/362, B23K 26/40, B23K 26/70, B23K 101/16, B23K 103/04

(54) **PROCÉDÉ DE DÉCAPAGE LASER D'UN PRODUIT MÉTALLIQUE EN DÉFILEMENT, ET INSTALLATION POUR SON EXÉCUTION**
VERFAHREN ZUM LASERSTRIPPEN EINES BEWEGTEN METALLPRODUKTS UND ANLAGE ZUR DURCHFÜHRUNG DAVON
METHOD FOR LASER STRIPPING A MOVING METAL PRODUCT AND PLANT FOR THE EXECUTION THEREOF

(43) Date de publication de la demande: 02.10.2019
(73) Titulaire: Aperam, 1882 Luxembourg (LU)
(72) Inventeur: LATOUCHE, Baptiste, 59800 Lille (FR); GUILLOTTE, Ismael, 62131 Verquin (FR); MARISSAEL, Antonin, 59800 Lille (FR); NEVEN, Ward, 3590 Diepenbeek (BE); DAMASSE, Jean-Michel, 59160 Lomme (FR)
(74) Mandataire: Lavoix
(86) Numéro de dépôt international: PCT/IB2016/057064
(87) Numéro de publication internationale: WO 2018/096382

(56) Documents cités:
- DE-C1- 3 705 603
- FR-A1- 2 703 618
- US-A- 5 948 172
- US-A1- 2009 002 686

## Description

La présente invention concerne l'enlèvement de la couche d'oxydes qui recouvre un produit métallique, notamment en acier, après que celui-ci a subi des expositions à une atmosphère oxydante pour certains de ses composants, par exemple lors d'un séjour dans un four de traitement thermique. En particulier la présente invention concerne un procédé et une installation de décapage d'un produit métallique en défilement présentant à sa surface une couche d'oxydes, et ce conformément au préambule des revendications 1 et 11 (voir par exemple US 5 948 172 A).

Dans la suite du texte, on prendra comme exemple privilégié d'application de l'invention le domaine des bandes et tôles d'acier inoxydable de toutes catégories (austénitiques, ferritiques, austéno-ferritiques...), fixes ou en défilement, laminées ou formées à chaud ou à froid. Mais il doit être entendu que cela ne sera absolument pas limitatif, et que l'invention pourra s'appliquer à d'autres métaux pour lesquels se posent des problèmes techniques analogues à ceux rencontrés sur les bandes et tôles d'acier inoxydable, notamment aux diverses classes d'aciers au carbone, et alliages spéciaux, notamment ferreux. Elle pourra aussi s'appliquer à d'autres produits que des bandes et tôles, par exemple à des fils et à des tubes avec et sans soudure, avec des adaptations des installations décrites qui seraient évidentes pour l'homme du métier.

Il est habituel que les tôles et bandes d'acier inoxydable subissent des traitements qui conduisent à ce qu'une couche d'oxydes indésirables se forme à haute température sur leurs surfaces, au contact d'une atmosphère oxydante telle que l'air. Ces oxydes ont une composition qui varie sensiblement selon la composition du métal de base et les conditions de leur formation. Le plus habituellement, les oxydes des éléments Fe, Cr, Mn et Si y sont prépondérants.

Les traitements qui conduisent à cette formation sont, typiquement, et non limitativement, les réchauffages que subit un demi-produit (lingot, brame, bloom, billette) avant son laminage à chaud et le séjour à l'air libre qu'il effectue après le laminage à chaud, et les divers recuits à plusieurs centaines de degrés que subit la bande ou la tôle avant et/ou pendant et/ou après son cycle de laminage à froid (celui-ci étant effectué en une ou plusieurs étapes, dont certaines peuvent être séparées par un recuit intermédiaire), si ces recuits ont lieu dans une atmosphère qui n'est pas parfaitement inerte ou réductrice. Ces oxydes indésirables doivent bien entendu être éliminés, avant que la tôle ou la bande ne devienne un produit utilisable ou un demi-produit prêt à subir les ultimes opérations de mise en forme qui en feront un produit utilisable. Il est aussi, souvent, important d'éliminer ces oxydes avant la première étape de laminage à froid, pour éviter qu'ils ne s'incrustent dans la surface du demi-produit pendant le laminage et ne conduisent à un état de surface médiocre.

Il doit être entendu que la couche d'oxydes indésirables dont on parle ici n'est pas la fine couche à base d'oxydes de Cr (dite « couche passive ») qui se forme spontanément à l'air et à température ambiante à la surface des aciers inoxydables, et qui les protège de l'oxydation. La couche d'oxydes qui pose problème, et que l'on veut éliminer, est celle qui se forme pendant des séjours de la bande à haute température en atmosphère oxydante. Une fois cette couche enlevée, la surface de l'acier inoxydable est mise à nu et la couche passive protectrice d'oxydes de Cr peut se former à nouveau, de façon rapide et spontanée, rendant l'acier de nouveau inoxydable dans des conditions d'utilisation habituelles.

L'utilisation d'un décalaminage mécanique par grenaillage (projection de billes dures sur la surface à traiter) et/ou par un brise-oxydes (passage de la bande entre des paires de rouleaux qui la font travailler en flexion, compression et traction) permet de fissurer et d'enlever aisément, par exemple par brossage, une grande partie des oxydes, mais peut être insuffisante pour en enlever la totalité. Le grenaillage a aussi l'inconvénient d'augmenter la rugosité de la surface, ce que les opérations ultérieurement subies par la tôle ou la bande ne permettent pas forcément de corriger lorsque cela n'est pas désiré.

Le plus classiquement, la couche d'oxydes indésirable est enlevée au moyen d'un procédé de décapage chimique ou électrolytique, ou d'une succession de tels décapages.

Le décapage chimique est réalisé dans un ou plusieurs bains d'acide fluorhydrique, chlorhydrique, sulfurique ou nitrique. Le décapage électrolytique est réalisé typiquement dans un bain de sulfate de sodium ou un bain acide (nitrique ou sulfurique).

Ces décapages conduisent à l'obtention d'une bande ou d'une tôle présentant un fini de surface que l'on classe habituellement dans diverses catégories faisant l'objet de normes :
- Fini 1D, pour des produits ayant subit un laminage à chaud, un recuit et un décapage, généralement un décapage chimique ; un décapage mécanique (brise oxyde, grenaillage) est généralement également utilisé en amont du décapage chimique ;
- Fini 2B, pour des produits ayant subi un recuit, un décapage généralement électrolytique et chimique et un passage au skin-pass (laminoir écrouisseur qui améliore la planéité de la bande et diminue sa rugosité, avec un faible taux de réduction de l'épaisseur du produit qui est de l'ordre de quelques % en principe) ;
- Fini 2D pour des produits laminés à froid ayant subi un recuit, un décapage et pas de skin-pass ;
- Fini 2E pour des produits laminés à froid ayant subi un recuit, un grenaillage, un décapage et pas de skin-pass.

Le décapage chimique est le procédé le plus radical pour éliminer les oxydes indésirables. Mais il présente de nombreux inconvénients.

Il consomme des quantités élevées d'acides, avec, au plus, de très faibles possibilité d'en récupérer une partie pour les réutiliser ultérieurement.

Les infrastructures nécessaires à son exécution, à savoir les bains de décapage successifs et leurs annexes, sont coûteuses et encombrantes. Il n'est pas rare de rencontrer des installations de décapage chimique de bandes en défilement dont la longueur est de l'ordre de 200 m.

Ces installations utilisent des produits dangereux, en particulier l'acide fluorhydrique. Leurs rejets polluants liquides et solides (boues renfermant les oxydes mélangés aux liquides de décapage) doivent être stockés et retraités selon une réglementation stricte dont la sévérité ne pourra que s'accroître dans l'avenir, ce qui est coûteux. Les bains d'acide, chauffés, dégagent également des vapeurs acides qu'il faut neutraliser. L'acide nitrique est aussi une source de dégagements de NOₓ qu'il faut capter et traiter.

On utilise aussi des procédés de décapage électrolytique, effectués alors que la bande ou la tôle plonge dans un bain généralement à base de sulfate de sodium, ou d'acide nitrique ou sulfurique, qui doit aussi être retraité après usage. Le décapage électrolytique nécessite une installation assez coûteuse utilisant une quantité relativement importante d'énergie électrique. Il peut être complété par un décapage chimique à l'acide, plus léger que lorsqu'un décapage chimique seul est utilisé, mais qui présente le même type d'inconvénients que ceux cités plus haut. Le décapage électrolytique produit, lui aussi, des boues qu'il faut stocker puis retraiter. Les bains usés doivent être retraités. Les retraitements des boues et des bains sont moins coûteux, dangereux et complexes que dans le cas d'un décapage chimique par bains d'acides, mais constituent quand même, là aussi, une contrainte très significative dans l'utilisation du procédé.

Enfin la présence de chrome hexavalent en solution dans les liquides de décapage représente un risque fort pour la santé du personnel et pour l'environnement : ses teneurs dans les liquides et l'exposition du personnel sont mesurées et suivies.

On a donc examiné des possibilités de remplacer, au moins dans certains cas, le décapage chimique ou électrolytique des produits métalliques par des procédés faisant usage d'un laser. L'ouvrage classique « Laser Cleaning » (Boris Luk'yanchuk, Décembre 2002, ISBN: 978-981-02-4941-0) évoque de telles possibilités, notamment pour le nettoyage des œuvres d'art et des bâtiments (notamment son chapitre 2 « an overview of experimental research into the laser cleaning of contaminants from surfaces), donc pour des surfaces fixes de tailles relativement réduites. Le rayon laser est projeté sur la surface à nettoyer et provoque le détachement de la couche d'oxydes.

De cette façon, on évite de faire appel à des acides et/ou à des sulfates, et il n'y a plus de retraitements de boues et de liquides polluants et dangereux à effectuer. On n'a qu'à recueillir les oxydes détachés, par exemple par aspiration, et on a la possibilité de les retraiter, de préférence par voie sèche, pour en récupérer les métaux qu'ils contiennent et les valoriser. La sécurité du personnel et de l'environnement de l'atelier est mieux assurée. L'ensemble de l'opération de nettoyage de la surface par laser présente aussi un meilleur bilan énergétique global que par voie humide (chimique et/ou électrolytique), d'autant que le coût en électricité du fonctionnement des lasers n'est pas très élevé, en particulier par rapport à ce qui est nécessaire pour un décapage électrolytique. L'installation peut être nettement plus compacte qu'une installation de décapage comportant plusieurs bains successifs, d'où des avantages clairs sur le coût des opérations de génie civil lors de la construction de l'installation. Si on utilise des lasers à fibre puisés, il est possible d'envoyer des quantités d'énergie élevées dans un temps très court, à une haute fréquence et avec une grande autonomie, et la durée de vie de ces lasers peut atteindre plusieurs années sans entretien particulier.

Cependant, l'utilisation des technologies déjà existantes, couplées à des lasers CO₂, excimer ou Nd :YAG, ne permet pas d'obtenir un résultat optimum sur des bandes ou tôles en défilement de format industriel, à cause d'une maintenance lourde, d'un mode de fonctionnement des lasers continu ou à pulses trop longs et d'un coût de fonctionnement trop élevé dû au nombre de lasers utilisés, compte tenu de la vitesse de défilement élevée des lignes actuelles. Par ailleurs les solutions apportées sont des solutions supposant un état de surface homogène selon la largeur et la longueur de la bande (voir le document EP 0 927 595-A1) et, le plus souvent, une vitesse de défilement fixe. Sur une même bande, si la vitesse de défilement venait à changer pour une raison spécifique, l'inertie des machines, et principalement celle du four, entraîne une modification (en épaisseur et/ou en nature) de la couche d'oxydes. Même si la nature et l'épaisseur de la couche d'oxydes à retirer étaient au préalable considérées comme connues, celles-ci sont alors modifiées et une adaptation de la fréquence ou de l'énergie des pulses en fonction de la vitesse ne fonctionne que si la couche d'oxydes ne change pas (ce qui n'est pas le cas en général). Enfin les vitesses de ligne atteignent environ 100-150 m/min dorénavant. Si l'on souhaite décaper une bande de 2 m de large défilant à cette vitesse, les scanners actuels balayant la surface sont limités par la vitesse de leurs moteurs, bien inférieure à la vitesse qui serait nécessaire pour éviter un balayage sur une distance très faible impliquant une rangée de centaines de lasers dans la largeur de la tôle. Par exemple, avec un laser Nd :YAG 1064 nm, 1 mJ, présentant un spot mesurant 0,120 mm de côté, si l'on veut que la totalité de la zone traitée ait été touchée par au moins un pulse de laser lors du décapage, le scanner doit revenir à son point de départ lorsque la bande s'est déplacée de 0,120 mm, et l'installation devrait alors comporter des centaines de lasers.

Le but de l'invention est de proposer une installation de décapage des produits métalliques, notamment sous forme de bandes en défilement issues de bobines de tôles laminées à chaud ou à froid, de barres, de fils, ou de tubes avec ou sans soudure, permettant d'exploiter au mieux les possibilités de décapage laser de ces produits métalliques à une échelle industrielle. Cette installation devrait être aussi polyvalente que possible en permettant de traiter des produits en aciers de diverses compositions, de divers états d'oxydation, de divers formats et épaisseurs (pour les bandes et tôles), les produits pouvant être en défilement dans l'installation de décapage laser à des vitesses diverses.

A cet effet, l'invention a pour objet un procédé de décapage d'un produit métallique en défilement présentant à sa surface une couche d'oxydes tel que défini dans la revendication 1, edit procédé utilisant un décapage par laser, et comprend les étapes suivantes :
- au moins un premier laser de longueur d'onde égale à celle des lasers utilisés pour le décapage, ou de préférence un groupe de tels premiers lasers, envoient chacun un rayon qui se réfléchit sur la surface oxydée du produit à décaper, lesdits rayons réfléchis par la surface oxydée étant interceptés par des capteurs qui envoient les informations qu'ils recueillent dans une unité de traitement ;
- une unité de traitement calcule l'absorption du rayon par la surface du produit, à partir des informations recueillies par les capteurs, en déduit l'émissivité de la surface oxydée du produit métallique dans la direction desdits rayons réfléchis, et corrèle cette émissivité avec des informations de référence préenregistrées dans ladite unité de traitement ;
- au moins un deuxième laser, ou de préférence un groupe de tels deuxièmes lasers, envoient chacun des pulses d'un rayon sur la surface du produit pour la décaper, les spots desdits pulses desdits rayons couvrant l'ensemble de la surface à décaper grâce à un balayage optique et/ou mécanique déplaçant latéralement les spots, des rayons sur la surface du produit, ou à un système optique transformant les spots en lignes, ledit ou lesdits deuxièmes lasers étant commandés par une unité de pilotage recevant des informations fournies par l'unité de traitement permettant de déterminer les paramètres de fonctionnement à imposer auxdits deuxièmes lasers pour obtenir le décapage de la surface du produit, par comparaison avec des résultats expérimentaux préenregistrés dans l'unité de pilotage ;
- et des moyens d'inspection de la surface décapée du produit vérifient l'efficacité du décapage en détectant la persistance éventuelle de zones non décapées ou mal décapées.

La fluence du spot de chaque pulse dudit au moins un deuxième laser peut être comprise entre 1 et 20 J/cm².

Parmi les informations préenregistrées dans l'unité de traitement peuvent figurer la composition du produit et la rugosité, mesurée ou estimée, de sa surface.

Après le décapage et avant l'inspection de la surface on peut procéder à une évacuation des oxydes décapés de la surface du produit, par exemple par aspiration et/ou par brossage.

Après l'inspection de la surface du produit, on peut procéder à un décapage complémentaire du produit, au moins dans les zones dont l'inspection a montré que leur décapage par le ou les deuxièmes lasers a été insuffisant.

Ledit décapage complémentaire peut être exécuté par au moins un troisième laser ou un groupe de tels troisièmes lasers, d'après des informations fournies par lesdits moyens d'inspection de la surface.

On peut vérifier par des deuxièmes moyens d'inspection, tels que des moyens optiques, l'efficacité dudit décapage complémentaire.

Le produit, après le décapage complémentaire et éventuellement la détection de zones imparfaitement décapées par les deuxièmes moyens d'inspection, peut être envoyé dans au moins un bain de décapage, chimique ou électrolytique.

Ledit décapage complémentaire peut aussi être effectué au moyen d'au moins un bain de décapage, chimique ou électrolytique.

Ledit produit métallique en défilement peut être une bande ou une tôle, et on le décape sur les deux faces de ladite bande ou tôle.

L'invention a également pour objet une installation de décapage laser d'un produit métallique en défilement telle que définie dans la revendication 11, cette installation comportant :
- au moins un premier laser de longueur d'onde égale à celle des lasers utilisés pour le décapage, ou de préférence un groupe de tels premiers lasers, envoyant chacun un rayon qui se réfléchit sur la surface oxydée du produit à décaper, et des capteurs qui interceptent les rayons réfléchis par ladite surface oxydée et envoient les informations qu'ils recueillent dans une unité de traitement ;
- une unité de traitement qui calcule l'absorption du rayon par la surface du produit, à partir des informations recueillies par les capteurs, et qui en déduit l'émissivité de la surface oxydée du produit métallique, et corrèle cette émissivité avec des informations de référence préenregistrées dans ladite unité de traitement ;

- au moins un deuxième laser, ou de préférence un groupe de tels deuxièmes lasers, qui envoient chacun un rayon sur la surface du produit pour la décaper, les spots desdits rayons étant capables de couvrir l'ensemble de la surface à décaper grâce à des systèmes de balayage optique et/ou mécanique déplaçant latéralement les spots des rayons sur la surface du produit, ou à un système optique transformant les spots en lignes, et une unité de pilotage commandant ledit ou lesdits deuxièmes lasers et recevant des informations fournies par l'unité de traitement permettant de déterminer les paramètres de fonctionnement à imposer auxdits deuxièmes lasers pour obtenir le décapage de la surface du produit, par comparaison avec des résultats expérimentaux préenregistrés dans l'unité de pilotage, et pilotant lesdits deuxièmes lasers en leur imposant lesdits paramètres de fonctionnement ;
- et des moyens d'inspection de la surface décapée du produit vérifient l'efficacité du décapage en détectant la persistance éventuelle de zones non décapées ou mal décapées.

Lesdits moyens d'inspection de la surface décapée du produit peuvent être des moyens optiques.

L'installation peut comporter des moyens d'évacuation des oxydes décapés de la surface du produit, par exemple par aspiration et/ou par brossage.

Elle peut comporter des moyens d'exécution d'un décapage complémentaire placés en aval desdits moyens d'inspection de la surface décapée du produit.

Lesdits moyens d'exécution d'un décapage complémentaire comportent au moins un troisième laser ou un groupe de tels troisièmes lasers, fonctionnant d'après des informations fournies par lesdits moyens d'inspection de la surface.

Lesdits moyens d'exécution d'un décapage complémentaire peuvent comporter au moins un bain de décapage, chimique ou électrolytique.

L'installation de décapage laser peut être disposée sur une ligne de traitement continue comportant également un four placé avant elle.

Ladite ligne continue peut comporter une installation de laminage du produit métallique.

Pour traiter les deux faces dudit produit métallique, qui consiste en une bande ou une tôle en défilement, l'installation peut comporter de part et d'autre dudit produit, au moins un premier laser, au moins un deuxième laser, et des moyens d'inspection de chaque surface dudit produit.

Pour traiter l'ensemble de la surface dudit produit métallique qui consiste en une barre, un tube ou un fil, l'installation peut comporter, répartis au voisinage de la périphérie dudit produit métallique, un groupe de premiers lasers, un groupe de deuxièmes lasers, et des moyens d'inspection de toute la surface dudit produit.

Comme on l'aura compris, l'invention consiste à réaliser un décapage laser d'un produit métallique de format quelconque au moyen d'une installation polyvalente, prévoyant de multiples instruments de contrôle de l'efficacité du décapage et permettant une optimisation de celui-ci pendant l'exécution du traitement de décapage lui-même.

L'invention sera mieux comprise à la lecture de la description qui suit, donnée en référence à la figure annexée qui montre schématiquement de profil un exemple d'installation selon l'invention de décapage laser d'une bande métallique en défilement, avec de possibles variantes d'exécution.

Les installations de décapage laser qui vont être décrites en détail et illustrées par des exemples le seront en référence au traitement d'une bande d'acier inoxydable laminée à froid en défilement, venant de subir un laminage à froid et un recuit sur une ligne continue, et l'installation de décapage laser selon l'invention, qui assure au moins l'essentiel de cette fonction de décapage, est également intégrée à cette ligne continue, en remplacement des installations de décapage électrolytique et/ou chimique habituellement utilisées sur ce type de ligne continue (on peut trouver des exemples de telles lignes continues notamment dans les documents EP 0 509 177-A2 et EP 0 695 808-A1).

Il va de soi que l'installation de décapage laser selon l'invention qui sera décrite peut aussi être intégrée à une ligne de traitement continue comportant plus ou moins d'appareillages que ce qui va être décrit, ou faire l'objet d'une installation séparée spécialement dédiée à ce décapage.

Egalement, on n'a pas représenté les appareillages habituellement présents sur de telles lignes qui n'ont pas de rôle métallurgique majeur et, en tout cas, n'interviennent pas en tant que tels dans la conduite du décapage laser réalisé selon l'invention. On peut notamment citer des rouleaux pinceurs pour la mise en défilement de la bande, et des accumulateurs de bande qui servent de « tampons » entre certains des appareillages qui peuvent nécessiter chacun une vitesse de défilement de la bande différente.

La ligne continue représentée comporte d'abord une installation de débobinage 1 d'une bobine 2 d'une bande 3 d'acier inoxydable laminée à chaud dont l'épaisseur est typiquement de l'ordre de quelques mm et dont la largeur peut aller typiquement jusqu'à 2 m. Cette bande 3 est mise en défilement à une vitesse allant typiquement jusqu'à 150 m/min, et, généralement après avoir été décapée par des moyens quelconques chimiques et/ou mécaniques non représentés, ou même par laser avec des moyens selon l'invention tels qu'on va les décrire, elle passe dans un laminoir à froid 4, qui réduit son épaisseur à une valeur qui est typiquement de l'ordre de 0,2 à 15 mm afin d'obtenir une bande laminée à froid

La bande 3 laminée à froid passe ensuite dans un four de recuit 5, où elle est portée à une température de plusieurs centaines de °C, qui est fonction des objectifs métallurgiques du recuit. Si ce recuit est effectué (délibérément ou accidentellement) en présence d'une quantité non négligeable d'un gaz oxydant tel que l'oxygène, il conduit à la formation d'une couche d'oxydes indésirables à la surface de la bande 3, dont la composition, l'épaisseur et l'adhérence sur la bande 3 dépendent notamment de la composition de la bande 3, de la composition de l'atmosphère du four 5, de la température dans le four 5, du temps de séjour de la bande 3 dans le four 5. Compte tenu de ces nombreux paramètres qui ne sont pas tous aisément maîtrisables et qui, de toute façon, peuvent sensiblement varier selon le traitement précis effectué (notamment la composition de la bande 3 et les conditions de recuit), on ne peut pas assigner des caractéristiques systématiques précises à cette couche d'oxydes qui permettraient une standardisation aisée des conditions de décapage de la bande 3. C'est aussi l'un des inconvénients des procédés de décapage par voie humide, notamment chimique, dont la composition des bains ne peut être aisément adaptée à ce qui serait réellement nécessaire pour obtenir un décapage satisfaisant de la bande 3 au moindre coût.

Selon l'invention, après le four de recuit 5, on dispose sur la ligne, et sur chaque face de la bande 3, une première rangée de lasers 6 d'une longueur d'onde égale à celle des lasers qui seront utilisés pour le décapage (par exemple des lasers Nd:YAG de longueur d'onde 1064 nm) dont les spots des rayons 7 sur la bande 3 peuvent, idéalement, couvrir toute la largeur de la bande 3 en se recouvrant le moins possible. La localisation de ces spots peut éventuellement varier au moyen d'un système de balayage de la surface analogue à ce que l'on décrira pour les lasers 13 assurant le décapage, de façon à ce que les spots des premiers lasers 6 couvrent la totalité ou une grande partie de la surface de la bande sans qu'un nombre excessif de premiers lasers 6 soit nécessaire. Cette première rangée de lasers 6 est associée à une série de capteurs 8 sur lesquels sont renvoyés les rayonnements 9 provenant de la réflexion des rayons 7 sur la surface oxydée de la bande 3. Les premiers lasers 6 doivent donc être placés avec un angle d'incidence connu afin de récupérer, à l'aide des capteurs 8, les informations selon le bon angle de réflexion. On compare, par une unité de traitement du signal 10 appropriée et programmée de façon classique, les intensités des rayonnements 9 reçus par chacun des capteurs 8 avec des intensités de référence selon ledit angle de réflexion, préenregistrées dans lesdits moyens de traitement 10, pour une bande nue, ou oxydée de façon standardisée, et qui aurait la même composition et la même rugosité que la bande 3 traitée. Cela permet de déterminer l'émissivité spectrale, pour cette longueur d'onde donnée et dans la direction considérée, de la surface de la bande 3 dans la zone concernée, qui est corrélée au degré d'absorption des rayonnements 7 issu de chacun des premiers lasers 6.

Le but des premiers lasers 6 est de déterminer l'énergie effective nécessaire au décapage dans la largeur de la bande et dans la longueur dans la bande en défilement. En effet il est possible, du fait des variations volontaires ou subies, des paramètres opératoires en amont de la ligne, par exemple des ralentissements, des accélérations de la bande sur la ligne, ou encore une pollution hétérogène sur la largeur de la bande 3 qui est survenue dans le four 5 ou avant celui-ci, d'obtenir une couche d'oxydes hétérogène sur la longueur et/ou la largeur de la bande 3 à décaper. Les premiers lasers 6 et les capteurs 8 correspondants permettent de quantifier cette hétérogénéité.

Le fait que la longueur d'onde des premiers lasers 6 soit la même que celle des lasers de décapage permet de s'assurer que les absorptions des rayons des premiers lasers 6 par les oxydes recouvrant la bande 3 seront les mêmes que pour les lasers de décapage, et que les réglages des lasers de décapage pourront donc être fondés directement sur les données obtenues par les premiers lasers 6 et les capteurs 8.

Pour obtenir une mesure fiable de l'absorption des premiers lasers 6, la bande 3 doit conserver une distance constante par rapport aux premiers lasers 6 et aux capteurs 8, c'est-à-dire que la bande 3 ne doit pas osciller et doit rester à hauteur fixe. Ceci peut être fait en appliquant une traction suffisamment importante à la bande 3 à l'aide de blocs en S ou en plaçant un rouleau de soutien 24 sous la bande 3 assurant la fixité de sa hauteur sous les premiers lasers 6.

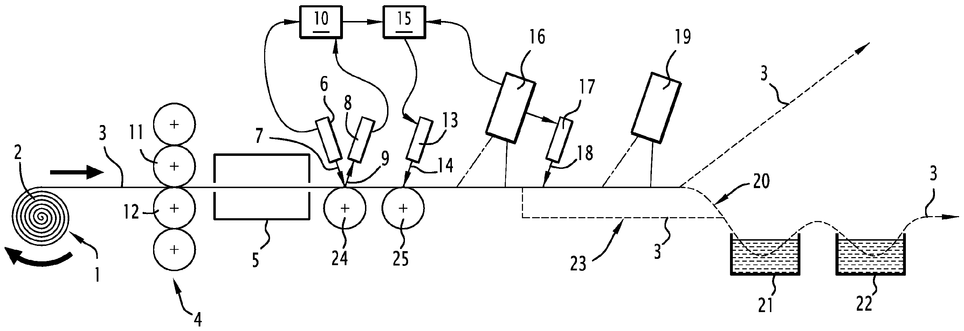

Par souci de simplicité, sur la figure 1 on n'a représenté des premiers lasers 6, leurs capteurs 8 et leurs rouleaux de soutien 24 associés que sur la face supérieure de la bande 3. Mais, bien entendu, d'autres lasers et leurs capteurs associés sont aussi présents sur la surface inférieure de la bande 3. De même, un rouleau de soutien comparable au rouleau 24 pourra être placé au contact de la surface supérieure de la bande 3 pour assurer que la bande 3 garde une distance fixe par rapport aux lasers qui inspectent sa surface inférieure.

Comme la rugosité effective de la bande 3 est difficile à mesurer dans le cas où la bande 3 est en défilement, on peut prendre comme hypothèse que cette rugosité est la même que celle des surfaces des cylindres de travail 11, 12 du laminoir à froid 4, qui est en principe connue du fait que ces cylindres 11, 12 sont régulièrement contrôlés et, si nécessaire, rectifiés pour que, justement, ils n'imposent pas aux surfaces de la bande 3 lors du laminage des rugosités qui seraient excessives ou hors de contrôle. Il sera souvent suffisant d'évaluer cette rugosité sur un seul des cylindres de travail 11, 12 comme, normalement, leur rugosité évolue de façon similaire lors de leur utilisation, mais on peut aussi faire le choix de ne pas supposer a priori l'égalité des rugosités des cylindres 11, 12 et de les évaluer toutes deux séparément. Dans le cadre du laminage à chaud la rugosité peut être également contrôlée par comparaison avec des mesures faites au préalable en dehors de la ligne de décapage sur ces produits ou des produits similaires.

A noter que si le produit à traiter est différent d'une bande 3 en défilement déroulée à partir d'une bobine 2, (par exemple s'il s'agit d'une tôle déjà découpée et laminée), et s'il est possible d'évaluer sa rugosité effective avant son entrée dans le four de recuit 5, alors on peut fonder la mesure de l'émissivité du produit oxydé à traiter sur cette rugosité effective.

Ensuite, la bande 3 défile devant une deuxième rangée de lasers 13 (par exemple des lasers pulsés Nd :YAG, 1064 nm) envoyant chacun un rayon 14 sur la surface de la bande 3.

Ces lasers 13 de la deuxième rangée sont ceux qui sont effectivement chargés du décapage proprement dit. Ils occupent des positions sur la direction transversale de la bande 3 qui font que chacun d'entre eux fait, optimalement, sensiblement face à un des lasers 6 de la première rangée. Ils sont commandés par une unité de pilotage 15 qui détermine quels doivent être leurs divers paramètres de fonctionnement en fonction :
- Des résultats des mesures d'émissivité de la surface de la bande 3 procurés par les premiers lasers 6, les capteurs 8 et l'unité de traitement 10 des informations qu'ils fournissent et qui sont transmis à l'unité 15 de pilotage des lasers 13 de la deuxième rangée ;
- Et de résultats expérimentaux préenregistrés dans l'unité de pilotage 15 qui permettent de savoir, à partir d'étalonnages réalisés au préalable sur des échantillons de référence de composition, rugosité et émissivité identiques ou proches de celles de la bande 3 à traiter, quels seraient les paramètres les plus appropriés pour le fonctionnement de chacun des lasers de décapage 13, en fonction notamment de l'émissivité mesurée dans la zone de la bande 3 qu'il peut atteindre, pour parvenir à un décapage satisfaisant de la bande.

Bien entendu, l'unité de traitement 10 et l'unité de pilotage 15 peuvent être regroupées dans un appareillage unique apte à remplir à lui seul toutes les fonctions des deux unités 10, 15.

De la même façon que pour les lasers 6 et capteurs 8, la bande 3 doit conserver une hauteur fixe lors du passage sous les lasers 13, et un rouleau de soutien 25 comparable au précédent rouleau de soutien 24, ou tout autre dispositif fonctionnellement équivalent, peut être utilisé à cet effet.

Egalement, d'autres lasers 13 non représentés, et leur éventuel rouleau de soutien associé, sont prévus pour décaper la surface inférieure de la bande 3, sur la base des informations fournies par les lasers 6 non représentés qui inspectent ladite surface inférieure.

Les lasers 13 peuvent être chacun placés non perpendiculairement à la tôle afin de minimiser la perturbation du faisceau incident par les particules d'oxydes projetés lors des pulses précédents émis par le laser 13 lui-même ou d'autres lasers 13 de la rangée.

Le nombre de lasers 13 nécessaire pour le traitement de l'ensemble de la surface de la bande 3 est minimisé par le fait que chaque laser 13 dispose d'un système de balayage ultra-rapide, optique ou mécanique ou combinant ces deux principes, qui procure un déplacement latéral du spot du rayon 14 de manière à juxtaposer les spots pour former une ligne continue couvrant la totalité de la largeur de la bande 3, de préférence avec un recouvrement nul ou minimal des spots pour ne pas risquer d'envoyer des quantités d'énergie excessives dans des zones de recouvrement des spots.

Un paramètre de fonctionnement dont il faut aussi tenir compte est la vitesse de défilement de la bande 3, qui va déterminer la fréquence des pulses et/ou la vitesse de balayage des lasers 13. Plus la vitesse de défilement est élevée, plus la fréquence et/ou la vitesse de balayage des pulses doit être élevée, pour que l'on soit assuré qu'une portion donnée de la largeur de la surface de la bande 3 est traitée par le laser 13 qui la concerne de façon adéquate et sensiblement identique aux autres portions. Quelle que soit la vitesse de défilement, chaque portion de bande dans la largeur doit avoir été traitée et doit avoir reçu la densité d'énergie requise et donnée par l'unité de pilotage 15. Cette densité d'énergie sera fonction du nombre de puises, de l'énergie par pulse, de la fréquence des puises, en prenant en compte la vitesse de balayage nécessaire pour obtenir le recouvrement optimum de la surface de la bande 3.

L'utilisation d'un décapage laser réalisé selon l'invention, procure à l'installation de décapage une grande polyvalence, d'autant que les paramètres du décapage peuvent être aisément ajustés en cours de traitement si on constate au cours de l'opération qu'ils ne sont pas optimaux. C'est le cas, par exemple, de la surface du spot de chaque deuxième laser 13, qu'un système classique de réglage de la focalisation du rayon peut permettre de modifier.

Une simplification possible de l'invention est qu'au lieu de disposer d'une rangée de premiers lasers 6 auxquels correspondent un nombre égal de deuxièmes lasers 13, on n'utilise qu'un nombre plus réduit de premiers lasers 6, voire un seul premier laser 6, en supposant que l'oxydation de la surface de la bande 3 est identique dans une large zone entourant un premier laser 6 donné, voire sur toute la largeur de la bande 3 si on n'a qu'un seul laser 6. On fait alors fonctionner des groupes de deuxièmes lasers 13, voire tous les deuxièmes lasers 13 s'il n'y a qu'un premier laser 6, avec les mêmes paramètres.

Au voisinage des deuxièmes lasers 13, on dispose des moyens (non représentés) pour évacuer et, de préférence, recueillir, par exemple par aspiration ou brossage en direction d'un récipient, les oxydes qui ont été détachés de la surface de la bande 3 ainsi que les fumées pouvant être générées pendant le traitement (par la vaporisation de particules métalliques, d'oxydes ou de matières organiques). De cette façon, on se donne la possibilité de récupérer aisément une quantité maximale de ces oxydes, pour éviter qu'ils ne se dispersent dans l'atmosphère ambiante en la polluant, et pour se donner la possibilité d'en retraiter la plus grande partie en vue de récupérer les métaux qu'ils contiennent. De plus, cette opération permet de se débarrasser des oxydes qui auraient pu n'être qu'imparfaitement détachés de la surface de la bande 3 par les lasers 13 (particulièrement sur la surface supérieure de la bande 3, où on ne peut compter sur la gravité pour aider au détachement des oxydes). Enfin l'aspiration de ces poussières et vapeurs permet d'éviter l'endommagement des systèmes optiques des lasers sur lesquels celles-ci peuvent s'agglomérer, provoquant leurs échauffements voire leurs ruptures.

Après son passage sous les deuxièmes lasers 13, la bande 3 est donc, en principe, entièrement décapée. On le vérifie par des moyens adéquats, par exemple à l'aide d'un dispositif optique de contrôle de la qualité du décapage tel qu'une caméra 16, ou un ensemble de tels dispositifs optiques 16, qui examine(nt) la surface de la bande 3 sur l'ensemble de sa largeur et détermine(nt) quelles zones de la bande 3 n'auraient éventuellement pas été décapées de façon satisfaisante. Les différences de couleur sur la surface de la bande 3 peuvent servir de base à cette détermination. Un des avantages du dispositif d'aspiration ou de brossage ou équivalent dont on vient de parler est aussi qu'il permet d'éviter que des morceaux d'oxydes qui seraient demeurés sur la surface supérieure (notamment) de la bande 3 tout en en étant détachés ne soient considérés à tort par la caméra 16 comme toujours présents et nécessitant, donc, un décapage complémentaire pour leur élimination.

Si les résultats fournis par le dispositif optique 16 ne sont pas satisfaisants, alors on peut procéder à un décapage complémentaire concernant les parties de la bande imparfaitement décapées, ou, par sécurité, l'ensemble de la bande.

Ainsi, dans la variante de l'invention représentée sur la figure 1, on dispose en aval du ou des dispositifs de contrôle de la qualité du décapage et des aspirateurs/brosses éventuels un ensemble de troisièmes lasers 17 comparables aux deuxièmes lasers 13, qui envoient chacun un rayon 18 sur les zones de la surface de la bande 3 dont on a détecté, grâce à la caméra 16 ou à un dispositif fonctionnellement équivalent, qu'elles n'avaient été qu'imparfaitement décapées par les deuxièmes lasers 13. Ces troisièmes lasers 17 peuvent être identiques, dans leur répartition sur la largeur de la bande 3, aux deuxièmes lasers 13 et possèdent également un système de maintenue en hauteur de la bande (par exemple un rouleau). On peut aussi en prévoir un moins grand nombre, mais avec des surfaces de spot des rayons 18 plus larges que pour les deuxièmes lasers 13, de sorte que le rayon 18 d'un troisième laser donné peut, par exemple, impacter une surface plus large que celle impactée par le rayon 14 d'un deuxième laser 13. On peut également concevoir que les troisièmes lasers 17 soient déplaçables latéralement, de manière à ce qu'ils puissent traiter une zone mal décapée qui ne serait pas située au droit de leur position nominale.

On peut également prévoir des systèmes optiques sur les troisièmes lasers 17 permettant de déplacer latéralement leurs faisceaux sans mouvement physique des lasers 17. On peut ainsi minimiser le nombre de troisièmes lasers 17 qui devraient être utilisés pour compléter le décapage de la bande 3, en particulier si l'expérience montrait que ce parachèvement du décapage n'était systématiquement utile que dans un nombre de zones limité.

Optimalement, un autre dispositif de récupération des oxydes par aspiration, brossage ou autre peut aussi être présent au voisinage des troisièmes lasers 17.

Optimalement, des moyens de contrôle de la qualité du décapage tels qu'une caméra 19 comparable à la caméra 16 précitée permettent de détecter l'éventuelle présence persistante de zones imparfaitement décapées.

Si le décapage de la bande 3 est jugé satisfaisant après son passage sous les deuxièmes lasers 13 ou sous les troisièmes lasers 17 s'il y en a, la bande 3 peut poursuivre son traitement, par exemple en subissant un passage dans un skin-pass puis en étant bobinée pour obtenir une bobine de bande laminée à froid et recuite, apte à être commercialisée ou à subir d'autres traitements tels qu'un revêtement.

Si le décapage de la bande 3 est jugé encore insatisfaisant après son passage sous les deuxièmes lasers 13 puis sous les troisièmes lasers 17 quand ils sont présents, on peut envisager plusieurs possibilités en restant dans le cadre de l'invention.

Si les défauts de décapage sont relativement légers, on peut poursuivre le traitement de la bande 3, mais en s'attendant à ce que sa qualité de surface ne sera pas celle escomptée, et qu'il faudra vraisemblablement la déclasser, c'est-à-dire la vendre au client à un prix inférieur à celui initialement prévu, ou à un client qui aura des exigences de qualité de surface moins strictes que le client qui avait commandé la bande 3.

Si les défauts de la bande 3 sont franchement rédhibitoires à ce stade, il faut rebuter la partie de la bande 3 qui les comporte, ou alors on fait repasser l'ensemble de la bande 3 dans la section de décapage laser, de façon analogue à ce qui est habituel dans l'art antérieur lorsqu'on ne dispose plus de moyens de décapage chimiques ou électrolytiques en aval du dernier contrôle.

Mais une autre solution peut être de prévoir sur la ligne, à la suite de la section de décapage laser, une section de bacs de décapage par voie humide, chimique et/ou électrolytique, que l'on pourrait remplir au moins temporairement, pour éliminer les défauts constatés. Dans le cas où la bande 3 serait décapée correctement, ces bains resteraient vides. Cette solution alternative est représentée symboliquement sur la figure 1, où la bande 3 peut suivre un chemin 20 qui l'oriente vers un bain de décapage électrolytique 21 puis vers un bain de décapage chimique 22. Cette configuration n'est, bien sûr, qu'un exemple non limitatif, et cette section de décapage « de secours » peut être conçue différemment, par exemple en ne faisant usage que d'un seul de ces deux types de bains 21, 22.

Une autre solution consiste à réaliser la déviation de la bande 3 dans le ou les bains de décapage 21, 22 au moyen de rouleaux plongeurs, déplaçables verticalement et disposés de façon à pouvoir agir sur la surface supérieure de la bande 3. En fonctionnement normal, ces rouleaux sont dans une position telle qu'ils laissent la bande 3 en défilement en dehors du bain de décapage 21, 22 au voisinage duquel ils sont disposés. Lorsqu'il s'avère qu'un décapage chimique et/ou électrolytique de la bande 3 est localement nécessaire, au moins un de ces rouleaux plongeurs s'abaisse de manière à appuyer sur la surface supérieure de la bande 3 et faire pénétrer temporairement la portion de la bande 3 à traiter dans le ou les bains de décapage 21, 22 correspondants que l'on veut utiliser.

En variante, on peut prévoir qu'il n'y ait pas de troisièmes lasers 17, et que la bande 3 puisse être orientée, si nécessaire, selon un chemin 23 vers la section de décapage humide 21, 22 précédemment décrite, après son inspection par les moyens de contrôle 16 qui suivent le décapage laser effectué par les deuxièmes lasers 13. On peut également envisager d'avoir systématiquement recours à cette section de décapage humide 21, 22, afin d'être totalement assurés que la bande 3 sera dans un état de surface partout satisfaisant.

Les réglages de la section de décapage électrolytique 21, s'il y en a une, peuvent optimalement être ajustés en fonction des résultats de l'inspection par les moyens de contrôle 16, 19. On peut, d'ailleurs, envisager de faire passer la bande 3 systématiquement au moins dans le bain de décapage électrolytique 21. Lorsque l'inspection de la bande 3 par la ou les caméras 16, 19 montre que l'utilisation de ce bain n'est pas utile pour une portion de la bande donnée, on peut rendre le bain de décapage électrolytique 21 inactif simplement en coupant son alimentation en courant électrique.

Une dernière inspection de la surface de la bande 3 à sa sortie de la section de décapage humide 21, 22 peut être réalisée pour vérifier la qualité du résultat final.

Certes, la solution représentée consistant à faire appel, éventuellement ou systématiquement, à une section de décapage par voie humide 21, 22 pour corriger les possibles imperfections du décapage par les lasers 13, 17 tend, à première vue, à diminuer l'intérêt financier et écologique de cette variante de l'invention par rapport à une installation qui se limiterait à l'emploi d'un ou plusieurs décapages laser pour le nettoyage de la bande 3.

Cependant, il faut savoir que l'un des effets du décapage laser, même s'il ne permet pas toujours forcément, à lui seul, d'enlever totalement la couche d'oxydes indésirables présents sur la bande 3, est de, au moins, modifier la partie résiduelle de cette couche d'oxydes pour la rendre plus homogène, et donc plus facilement décapable par voie humide. Le ou les décapages par voie humide qui sont alors effectués par les bains 21, 22 pour éliminer ces oxydes résiduels peuvent utiliser des bains moins agressifs et/ou de volumes plus réduits que si l'intégralité du décapage devait être réalisée par voie humide. Il faut également tenir compte du fait que ce décapage par voie humide supplémentaire éventuel peut permettre d'éviter de déclasser ou de rebuter le métal qui n'aurait pas été parfaitement traité par la section de décapage laser, et donc de limiter l'impact financier de ces imperfections. On peut aussi concevoir cette section de décapage humide 21, 22 comme pouvant se substituer entièrement à la section de décapage laser lorsque celle-ci doit subir une opération de maintenance qui empêche son utilisation. De cette façon, la ligne de décapage est utilisable même pendant cette opération de maintenance.

De plus, l'utilisation finale d'un léger décapage par voie humide conduit à un fini de surface plus assurément comparable à ceux dont les clients ont l'habitude que dans le cas de l'utilisation d'un décapage laser seul. Cela peut rendre les bandes 3 ainsi produites acceptables sans réticences par les clients tant que ceux-ci ne sont pas convaincus qu'un décapage laser seul, bien exécuté, est suffisant pour obtenir des bandes ayant de bonnes qualités de surface. Sans utilisation de bains de décapage 21, 22, les finis de surface des bandes 3 décapées uniquement par laser seraient de nouveaux types de finis qu'il pourrait être nécessaire d'inclure dans les normes.

Comme on l'a dit, les adaptations du procédé, tel qu'il a été décrit et représenté, sont évidentes pour l'homme du métier lorsqu'on veut traiter des produits différents de bandes en défilement. Une installation très similaire peut traiter des tôles ou des plaques, préalablement découpées à partir de bandes ou obtenues autrement.

Dans le cas d'un traitement de barres, de fils ou de tubes, les différents lasers et moyens d'inspection sont disposés autour de la surface à décaper, et il est évident que le terme « rangée de lasers » qui a été utilisé pour la description de l'exemple la figure 1 est valable aussi pour ce type d'applications en considérant que le mot « rangée » n'implique pas que les lasers concernés soient situés dans un même plan parallèle au produit à décaper : ils peuvent être aussi disposés selon un chemin sensiblement parallèle au pourtour du produit à traiter.

Dans certains cas où les produits métalliques à traiter seraient de très faible largeur, il demeurerait dans l'esprit de l'invention de n'utiliser qu'un seul laser dans chaque groupe de lasers 8, 13, 17 dont on a parlé. On peut alors choisir de focaliser au moins les deuxième et troisième lasers de décapage 13, 17 de façon à ce que leurs spots couvrent en permanence la totalité de la surface à décaper, ou de conserver des spots de faibles dimensions mais faire se déplacer ces lasers de façon à rendre possible le traitement de l'intégralité de la surface du produit à l'aide d'un seul laser de décapage par étape. Ce serait particulièrement adapté, notamment, au traitement de fils de petits diamètres. Bien entendu, la vitesse de déplacement des lasers sera fonction, notamment, de la vitesse de défilement du produit à décaper.

Dans le cas du traitement de tubes soudés, on peut avantageusement insister particulièrement sur le décapage laser au niveau du cordon de soudure, qui est la partie la plus susceptible d'avoir subi une oxydation superficielle importante, en choisissant des réglages particuliers pour le ou les deuxièmes lasers 13 qui le traitent.

Concernant les deuxièmes et troisièmes lasers 13, 17 utilisables pour la mise en œuvre du procédé selon l'invention, on peut utiliser notamment :
- Des systèmes optiques qui permettent de générer pour chaque laser 13, 17 une lame fine, de plusieurs centimètres de long ; un balayage n'est alors pas nécessaire et on fait varier la fréquence et l'énergie des pulses selon les indications de l'unité de pilotage 15 pour obtenir la densité d'énergie requise en fonction de la vitesse effective de la bande 3 ;
- Ou des scanners polygones qui créent un mouvement de balayage des rayons 14, 18 issus des lasers 13, 17, avec des vitesses de balayage pouvant aller au-delà de 200 m/s.

On peut utiliser par exemple des lasers 13, 17 Nd :YAG délivrant des pulses de 1 mJ ou 100 mJ. Les dimensions des spots (les spots des pulses sur la bande) sont déterminées par leur puissance. Par contre en défocalisant les pulses ou en utilisant des systèmes optiques, de façon connue, on peut les faire diverger ou converger davantage, et donc changer les tailles des spots.

Un laser 1 mJ a une puissance de 1000 W pour une fréquence de 1 MHz ou de 500 W pour une fréquence de 500 kHz et un diamètre de spot fixe de 114 µm, ou un diamètre de spot plus élevé et variable si on utilise à cet effet des moyens optiques ou des moyens de défocalisation du pulse. Un laser 100 mJ a une puissance de 1000 W pour une fréquence de 10 kHz ou de 500 W pour une fréquence de 5 kHz, et une dimension de spot facilement ajustable en faisant varier la focalisation du faisceau, pouvant être de l'ordre du mm.

Le laser 1 mJ a donc généralement un spot plus petit qu'un laser 100 mJ. Cela s'explique par le fait que faire passer une quantité d'énergie élevée dans un pulse de petite taille entraînerait un échauffement excessif de la fibre. La forme du pulse est également différente, le pulse du laser 1 mJ étant conique alors que celui du laser 100 mJ est normalement cylindrique (mais une défocalisation peut permettre de le rendre conique). En effet, une quantité d'énergie élevée est obtenue au détriment de la qualité du faisceau, d'où la différence de forme et de dimensions entre les deux types de lasers décrits.

Les mécanismes qui entrent en jeu dans le procédé de décapage laser sont multiples : vaporisation de l'oxyde sous l'effet de la chaleur, modification de l'interface métal/oxyde par l'onde de choc due aux puises, et dilatation thermique décollant l'oxyde. L'article "Preliminary study on the laser cleaning of stainless steels after high temperature oxidation / Pandora Psyllaki, Roland Oltra", Materials Science and Engineering A 282 (1-2, pp:145-152, April 2000, traite de cet aspect. On peut également ajouter l'effet de restructuration de l'oxyde, qui devient homogène sous l'effet du laser et peut ainsi être enlevé d'une façon plus aisée et fiable, que ce soit directement par les divers lasers, ou par des bains de décapage qui les suivent et qui sont moins volumineux ou moins agressifs que lorsqu'ils doivent assurer seuls le décapage.

Parmi les informations de référence devant être stockées dans l'unité de traitement 10 figurent les mesures d'émissivité spectrale dans la direction à considérer et d'émissivité totale hémisphérique en fonction de la composition de la bande, de sa température et de ses dimensions (épaisseur, largeur) et l'orientation du faisceau laser (pour l'émissivité directionnelle).

Ainsi, par exemple, pour des bandes de 1500 mm de large et de 0,78 mm d'épaisseur en acier inoxydable austénitique 304L et pour des bandes de 1250 mm de large et de 1,46 mm d'épaisseur en acier inoxydable austénitique au Mo 316L, des exemples de données à stocker comme références pour des bandes oxydées dans l'unité de traitement 10 sont donnés dans le tableau 1, ces données ayant été déterminées expérimentalement.

En fonction des nuances étudiées et des épaisseurs d'oxyde différentes, les paramètres du laser, par exemple un laser pulsé Nd :YAG - 1mJ, doivent permettre de retirer les couches d'oxyde selon leur nature. Les seuils de dégradation des oxydes pour des pulses de 120 ns sont compris entre 1 et 5 J/cm². La distribution des pulses sur la surface est adaptable, mais pour avoir un recouvrement idéal dans l'exemple décrit, on a choisi un recouvrement quasi nul entre deux pulses dans la direction de balayage, et un recouvrement de 75% entre deux pulses dans le sens de défilement de la bande 3 (une zone donnée de la bande dans laquelle ce recouvrement a lieu est donc affectée par les spots de quatre pulses). Dans ces conditions, la fluence par pulse appliquée doit être, en général, comprise entre 1 et 20 J/cm² pour chaque spot (en fonction des natures et des épaisseurs des oxydes à retirer). Dans cet exemple, on se place entre 2 et 11 J/cm². On peut alors retirer une épaisseur d'oxydes à la surface, par exemple, d'un acier inoxydable 316L ou 304L, de l'ordre de quelques dixièmes de µm à plusieurs µm.

La fluence par pulse applicable dans le cas des éventuels troisièmes lasers 17 est typiquement du même ordre de grandeur (1 à 20 J/cm²) que pour les deuxièmes lasers 13. Elle pourra, dans les faits, souvent être inférieure comme, normalement, l'essentiel du décapage aura déjà été assuré par les deuxièmes lasers 13. Optimalement, cependant, il est préférable que les troisièmes lasers 17 puissent procurer la même fluence par pulse que les deuxièmes lasers 13 pour qu'ils puissent, à eux seuls, assurer un décapage complet des portions de la surface du produit qu'un réglage imparfait des deuxièmes lasers 13 auraient laissées non décapées du fait d'un non-recouvrement des spots de deux pulses successifs.

Les bandes de 304L ont été élaborées comme suit : laminage à chaud jusqu'à une épaisseur de 3 mm, recuit puis décapage chimique sur une première ligne de recuit, puis laminage à froid sur un laminoir de type Sendzimir (20 cylindres) jusqu'à une épaisseur de 0,78 mm en un seul trait, recuit sur une deuxième ligne à une température allant jusqu'à 1120°C pendant 1 minute et 6 secondes avec une vitesse de défilement de 77 m/min, conduisant à une couche d'oxydes d'épaisseur 250 nm environ.

Les bandes de 316L ont été élaborées comme suit : laminage à chaud jusqu'à une épaisseur de 3 mm, recuit puis décapage chimique sur une première ligne de recuit, puis laminage à froid sur un laminoir quarto à émulsion jusqu'à une épaisseur de 1,46 mm, recuit sur une deuxième ligne à une température allant jusqu'à 1150°C pendant 1 minute et 16 secondes avec une vitesse de défilement de 67 m/min, conduisant à une couche d'oxydes d'épaisseur 250 nm environ.

**Tableau 1 : Emissivités directionnelles mesurées expérimentalement pour deux types de bandes oxydées**

| Emissivité spectrale directionnelle (à 20°C, 1064nm) | 304L, 1500 mm de large, 0,78 mm d'épaisseur, bande oxydée | 316L, 1250 mm de large, 1,46 mm d'épaisseur, bande oxydée |
|---|---|---|
| 12° | 0,878 | 0,742 |
| 24° | 0,880 | 0,749 |
| 36° | 0,875 | 0,742 |
| 48° | 0,877 | 0,761 |
| Emissivité totale hémisphérique à 1150°C | 0,367 | 0,535 |

Les lasers peuvent aussi être utilisés à l'aide d'un système optique transformant le pulse en ligne, ou à l'aide d'un scanner polygone.

Dans le cas où l'on utilise un système optique transformant le pulse en ligne, si on utilise un laser 100 mJ avec une aire de spot de 1,4 x 1,4 mm soit 1,96 mm², sur une bande défilant normalement à 100 m/min, pour avoir un laser opérant sur une ligne de 15 cm, cette aire de spot nécessite une largeur de spot de 0,013 mm, soit 13 µm. Si la bande défile à 100 m/min, elle parcourt 13 µm en 0,0078 ms. Pour que le spot recouvre toute la surface visée, il faut donc un pulse tous les 0,0078 ms, ce qui correspond à 128 kHz pour une puissance totale des lasers de 12,8 kW. 12 lasers sont donc nécessaires à cet effet pour une bande de 1500 mm de large.

Si on désire que chaque laser opère sur une ligne de 10 cm, la largeur de spot doit être de 20 µm selon le même calcul que précédemment. Toujours pour une vitesse nominale de la bande de 100 m/min, il faut une fréquence de 85 kHz correspondant à une puissance totale de 8,5 kW. 13 ou 14 lasers sont donc nécessaires pour une bande de 1500 mm de large. Il en faudrait 20 pour une bande de 2000 mm de large.

Dans le cas où l'on utilise un scanner polygone, il faut reprendre le calcul effectué précédemment en calculant la vitesse nécessaire de balayage pour avoir au moins toute la surface traitée dans le sens de défilement et dans la largeur de la bande. Si l'on prend un pulse de 1,4 mm de côté, sur une bande défilant normalement à 100m/min, pour avoir un laser opérant sur 15 cm, le scanner polygone doit être capable de parcourir deux fois cette distance quand la bande se sera déplacée de 1,4mm, soit à une vitesse de 360 m/s. La fréquence du laser doit être capable de fournir une rangée de pulses juxtaposés dans la direction du scan, soit un peu moins de 260 pulses aller, soit environ 600kHz.

Dans ces conditions, il a été possible d'obtenir un très bon décapage des oxydes de 304L comme de 316L, ne nécessitant pas de décapage chimique ou électrochimique ultérieur.

Les paramètres à prendre en compte pour le pilotage des deuxièmes et troisièmes lasers 13, 17, et devant tenir compte de la nature du produit à traiter (composition, largeur) et de son histoire (paramètres du recuit au cours duquel l'essentiel de la couche d'oxydes à décaper s'est formée, rugosité imposée par les cylindres du laminoir à chaud ou à froid), en plus de l'émissivité que les premiers lasers 6 et les capteurs 8 associés ont permis de mesurer, sont notamment :
- La vitesse de défilement de la bande ;
- La puissance du laser ;
- La durée des puises ;
- La fréquence des puises ;
- La largeur de bande que chaque laser est appelée à traiter ;
- La vitesse de déplacement (mécanique et/ou optique) des spots des lasers.

L'émissivité mesurée est, de préférence, comparée avec la valeur standard théorique enregistrée dans l'unité de traitement 10 que la nature du produit et son histoire auraient a priori imposée. Si le résultat est franchement différent de celui escompté, montrant ainsi que la formation des oxydes ne s'est pas déroulée exactement comme attendu, alors on peut apporter un facteur correctif à un ou plusieurs des paramètres de fonctionnement des deuxièmes lasers 13 de façon à adapter ces paramètres aux conditions réelles rencontrées. La caméra 16, ou le dispositif équivalent, permet de s'assurer que le correctif aux réglages préenregistrés a été suffisamment efficace, et dans le cas contraire, de commander en conséquence les troisièmes lasers 17 ou de dévier directement le produit vers les bains de décapage 21, 22. On peut ainsi limiter autant que possible le recours aux bains de décapage 21, 22 en plus ou à la place des troisièmes lasers 17 pour corriger les imperfections de l'étape principale du décapage assurée par les deuxièmes lasers 13.

Si, pour simplifier la programmation de l'unité de traitement 10 et le processus de modélisation et d'apprentissage, on ne souhaite pas lui intégrer la possibilité d'apporter de tels facteurs correctifs, on peut, bien entendu, se contenter de se reposer entièrement sur la caméra 16, les troisièmes lasers 17 et/ou les bains de décapage 21, 22 pour corriger les possibles imperfections du traitement par les deuxièmes lasers 13.

## Revendications

1. Procédé de décapage d'un produit métallique en défilement présentant à sa surface une couche d'oxydes, ledit procédé utilisant un décapage par laser, **caractérisé en ce que** :
- au moins un premier laser (6) de longueur d'onde égale à celle des lasers (13, 17) utilisés pour le décapage, ou de préférence un groupe de tels premiers lasers (6), envoient chacun un rayon (7) qui se réfléchit sur la surface oxydée du produit à décaper, lesdits rayons (9) réfléchis par la surface oxydée étant interceptés par des capteurs (8) qui envoient les informations qu'ils recueillent dans une unité de traitement (10) ;
- une unité de traitement (10) calcule l'absorption du rayon (7) par la surface du produit, à partir des informations recueillies par les capteurs (8), en déduit l'émissivité de la surface oxydée du produit métallique dans la direction desdits rayons réfléchis (9), et corrèle cette émissivité avec des informations de référence préenregistrées dans ladite unité de traitement (10) ;
- au moins un deuxième laser (13), ou de préférence un groupe de tels deuxièmes lasers (13), envoient chacun des pulses d'un rayon (14) sur la surface du produit pour la décaper, les spots desdits pulses desdits rayons (14) couvrant l'ensemble de la surface à décaper grâce à un balayage optique et/ou mécanique déplaçant latéralement les spots des rayons (14) sur la surface du produit, ou à un système optique transformant les spots en lignes, ledit ou lesdits deuxièmes lasers étant commandés par une unité de pilotage (15) recevant des informations fournies par l'unité de traitement (10) permettant de déterminer les paramètres de fonctionnement à imposer auxdits deuxièmes lasers (13) pour obtenir le décapage de la surface du produit, par comparaison avec des résultats expérimentaux préenregistrés dans l'unité de pilotage (15) ;
- et des moyens d'inspection de la surface décapée du produit vérifient l'efficacité du décapage en détectant la persistance éventuelle de zones non décapées ou mal décapées.

2. Procédé selon la revendication 1, **caractérisé en ce que** la fluence du spot de chaque pulse dudit au moins un deuxième laser (13) est comprise entre 1 et 20 J/cm².

3. Procédé selon la revendication 1 ou 2, **caractérisé en ce que**, parmi les informations préenregistrées dans l'unité de traitement (10) figurent la composition du produit et la rugosité, mesurée ou estimée, de sa surface.

4. Procédé selon l'une des revendications 1 à 3, **caractérisé en ce qu'**après le décapage et avant l'inspection de la surface on procède à une évacuation des oxydes décapés de la surface du produit, par exemple par aspiration et/ou par brossage.

5. Procédé selon l'une des revendications 1 à 4, **caractérisé en ce que**, après l'inspection de la surface du produit, on procède à un décapage complémentaire du produit, au moins dans les zones dont l'inspection a montré que leur décapage par le ou les deuxièmes lasers (13) a été insuffisant.

6. Procédé selon la revendication 5, **caractérisé en ce que** ledit décapage complémentaire est exécuté par au moins un troisième laser (17) ou un groupe de tels troisièmes lasers (17), d'après des informations fournies par lesdits moyens d'inspection de la surface.

7. Procédé selon la revendication 6, **caractérisé en ce qu'**on vérifie par des deuxièmes moyens d'inspection, tels que des moyens optiques (19), l'efficacité dudit décapage complémentaire.

8. Procédé selon la revendication 6 ou 7, **caractérisé en ce que** le produit, après le décapage complémentaire et éventuellement la détection de zones imparfaitement décapées par les deuxièmes moyens d'inspection, est envoyé dans au moins un bain de décapage, chimique (22) ou électrolytique (21).

9. Procédé selon la revendication 5, **caractérisé en ce que** ledit décapage complémentaire est effectué au moyen d'au moins un bain de décapage, chimique (22) ou électrolytique (21).

10. Procédé selon l'une des revendications 1 à 9, **caractérisé en ce que** ledit produit métallique en défilement est une bande ou une tôle, et **en ce qu'**on le décape sur les deux faces de ladite bande ou tôle.

11. Installation de décapage laser d'un produit métallique en défilement, comprenant au moins un deuxième laser (13), ou de préférence un groupe de tels deuxièmes lasers (13), qui envoient chacun un rayon (14) sur la surface du produit pour la décaper, les spots desdits rayons (14) étant capables de couvrir l'ensemble de la surface à décaper grâce à des systèmes de balayage optique et/ou mécanique déplaçant latéralement les spots des rayons (14) sur la surface du produit, ou à un système optique transformant les spots en lignes, et **caractérisée en ce qu'**elle comporte :
- au moins un premier laser (6) de longueur d'onde égale à celle des lasers (13, 17) utilisés pour le décapage, ou de préférence un groupe de tels premiers lasers (6), envoyant chacun un rayon (7) qui se réfléchit sur la surface oxydée du produit à décaper, et des capteurs (8) qui interceptent les rayons réfléchis (9) par ladite surface oxydée et envoient les informations qu'ils recueillent dans une unité de traitement (10) ;
- une unité de traitement (10) qui calcule l'absorption du rayon (7) par la surface du produit, à partir des informations recueillies par les capteurs (8), et qui en déduit l'émissivité de la surface oxydée du produit métallique, et corrèle cette émissivité avec des informations de référence préenregistrées dans ladite unité de traitement (10) ;
- une unité de pilotage (15) commandant ledit ou lesdits deuxièmes lasers et recevant des informations fournies par l'unité de traitement (10) permettant de déterminer les paramètres de fonctionnement à imposer auxdits deuxièmes lasers (13) pour obtenir le décapage de la surface du produit, par comparaison avec des résultats expérimentaux préenregistrés dans l'unité de pilotage (15), et pilotant lesdits deuxièmes lasers (13) en leur imposant lesdits paramètres de fonctionnement ;
- et des moyens d'inspection de la surface décapée du produit vérifient l'efficacité du décapage en détectant la persistance éventuelle de zones non décapées ou mal décapées.

12. Installation de décapage laser selon la revendication 11, **caractérisée en ce que** lesdits moyens d'inspection de la surface décapée du produit sont des moyens optiques (16).

13. Installation de décapage laser selon la revendication 11 ou 12, **caractérisée en ce qu'**elle comporte des moyens d'évacuation des oxydes décapés de la surface du produit, par exemple par aspiration et/ou par brossage.

14. Installation de décapage laser selon l'une des revendications 11 à 13, **caractérisée en ce qu'**elle comporte des moyens d'exécution d'un décapage complémentaire placés en aval desdits moyens d'inspection de la surface décapée du produit.

15. Installation de décapage laser selon la revendication 14, **caractérisée en ce que** lesdits moyens d'exécution d'un décapage complémentaire comportent au moins un troisième laser (17) ou un groupe de tels troisièmes lasers (17), fonctionnant d'après des informations fournies par lesdits moyens d'inspection de la surface.

16. Installation de décapage laser selon la revendication 14 ou 15, **caractérisé en ce que** lesdits moyens d'exécution d'un décapage complémentaire comportent au moins un bain de décapage, chimique (22) ou électrolytique (21).

17. Installation de décapage laser selon l'une des revendications 1 à 16, **caractérisée en ce qu'**elle est disposée sur une ligne de traitement continue comportant également un four (5) placé avant ladite installation de décapage laser.

18. Installation de décapage laser selon la revendication 17, **caractérisée en ce que** ladite ligne continue comporte une installation de laminage du produit métallique.

19. Installation de décapage laser selon l'une des revendications 11 à 18, **caractérisée en ce que**, pour traiter les deux faces dudit produit métallique, qui consiste en une bande (3) ou une tôle en défilement, elle comporte de part et d'autre dudit produit, au moins un premier laser (6), au moins un deuxième laser (13), et des moyens d'inspection de chaque surface dudit produit.

20. Installation de décapage laser selon l'une des revendications 11 à 18, **caractérisée en ce que**, pour traiter l'ensemble de la surface dudit produit métallique qui consiste en une barre, un tube ou un fil, elle comporte, répartis au voisinage de la périphérie dudit produit métallique, un groupe de premiers lasers (6), un groupe de deuxièmes lasers (13), et des moyens d'inspection de toute la surface dudit produit.

## Patentansprüche

1. Verfahren zum Dekapieren eines Metallprodukts im Durchlauf, das an seiner Oberfläche eine Oxidschicht aufweist, wobei das Verfahren ein Dekapieren per Laser anwendet, **dadurch gekennzeichnet, dass**:
- wenigstens ein erster Laser (6) mit einer Wellenlänge, die gleich jener der Laser (13, 17) ist, die zum Dekapieren verwendet werden, oder bevorzugt eine Gruppe solcher ersten Laser (6), jeweils einen Strahl (7) aussenden, der an der oxidierten Oberfläche des zu schneidenden Produkts reflektiert wird, wobei die Strahlen (9), die von der oxidierten Oberfläche reflektiert werden, von Sensoren (8) aufgefangen werden, die die Informationen, die sie sammeln, in eine Verarbeitungseinheit (10) senden,
- eine Verarbeitungseinheit (10) die Absorption des Strahls (7) durch die Oberfläche des Produkts berechnet ausgehend von den Informationen, die von den Sensoren (8) gesammelt werden, unter Ableiten des Emissionsvermögens der oxidierten Oberfläche des Metallprodukts in der Richtung der besagten reflektierten Strahlen (9), und dieses Emissionsvermögen in Korrelation bringt mit Referenzinformationen, die in der Verarbeitungseinheit (10) voraufgezeichnet sind,
- wenigstens ein zweiter Laser (13), oder bevorzugt eine Gruppe solcher zweiten Laser (12), jeweils Pulse eines Strahls (14) auf die Oberfläche des Produkts aussenden, um diese zu dekapieren, wobei die Spots dieser Pulse dieser Strahlen (14) die Gesamtheit der zu dekapierenden Oberfläche abdecken aufgrund eines optischen und/oder mechanischen Abtastens, das die Spots der Strahlen (14) auf der Oberfläche des Produkts seitlich verlagert, oder eines optischen Systems, das die Spots zu Linien transformiert, wobei der oder die zweiten Laser gesteuert werden von deiner Steuereinheit (15), die Informationen empfängt, die von der Verarbeitungseinheit (10) geliefert werden, es erlaubend, Funktionsparameter zu ermitteln, die auf die zweiten Laser (13) anzuwenden sind zum Erzielen des Dekapierens der Oberfläche des Produkts, mittels Vergleichens mit experimentellen Ergebnissen, die in der Steuereinheit (15) voraufgezeichnet sind,
- und Mittel zum Inspizieren der dekapierten Oberfläche des Produkts die Effektivität des Dekapierens verifizieren mittels Detektierens des eventuellen Fortbestands von nicht dekapierten oder schlecht dekapierten Bereichen.

2. Verfahren gemäß Anspruch 1, **dadurch gekennzeichnet, dass** die Fluenz des Spots jedes Pulses des besagten wenigstens einen zweiten Lasers (13) zwischen 1 und 10 J/cm² beträgt.

3. Verfahren gemäß Anspruch 1 oder 2, **dadurch gekennzeichnet, dass** unter den in der Verarbeitungseinheit (10) voraufgezeichneten Informationen die Zusammensetzung des Produkts und die Rauigkeit, gemessen oder geschätzt, dessen Oberfläche stehen.

4. Verfahren gemäß einem der Ansprüche 1 bis 3, **dadurch gekennzeichnet, dass** man nach dem Dekapieren und vor dem Inspizieren der Oberfläche ein Abführen der dekapierten Oxide von der Oberfläche des Produkts durchführt mittels zum Beispiel Absaugens und/oder Abbürstens.

5. Verfahren gemäß einem der Ansprüche 1 bis 4, **dadurch gekennzeichnet, dass** man nach dem Inspizieren der Oberfläche des Produkts ein komplementäres Dekapieren des Produkts durchführt wenigstens in den Bereichen, deren Inspizierung gezeigt hat, dass deren Dekapieren durch den oder die zweiten Laser (13) ungenügend gewesen ist.

6. Verfahren gemäß Anspruch 5, **dadurch gekennzeichnet, dass** das besagte komplementäre Dekapieren durchgeführt wird mittels wenigstens eines dritten Lasers (17) oder einer Gruppe solcher dritten Laser (17) nach den Informationen, die von den besagten Mitteln zum Inspizieren der Oberfläche geliefert wurden.

7. Verfahren gemäß Anspruch 6, **dadurch gekennzeichnet, dass** man mittels zweiter Mittel zum Inspizieren, wie optischen Mitteln (19), die Effizienz des besagten komplementären Dekapierens verifiziert.

8. Verfahren gemäß Anspruch 6 oder 7, **dadurch gekennzeichnet, dass** das Produkt, nach dem komplementären Dekapieren und eventuellen Detektieren von unvollkommenen dekapierten Bereichen mittels der zweiten Mittel zum Inspizieren, in wenigstens ein Bad zum elektrischen (22) oder elektrolytischen (21) Dekapieren transportiert wird.

9. Verfahren gemäß Anspruch 5, **dadurch gekennzeichnet, dass** das besagte komplementäre Dekapieren bewirkt wird mittels wenigstens eines Bads zum chemischen (22) oder elektrolytischen (21) Dekapieren.

10. Verfahren gemäß einem der Ansprüche 1 bis 9, **dadurch gekennzeichnet, dass** das Metallprodukt im Durchlauf ein Band oder ein Blech ist, und dass man es an beiden Seiten des Bands oder Blechs dekapiert.

11. Einrichtung zum Laserdekapieren eines Metallprodukts im Durchlauf, aufweisend wenigstens einen zweiten Laser (13), oder bevorzugt eine Gruppe solcher zweiten Laser (13), die jeweils einen Strahl (14) auf die Oberfläche des zu dekapierenden Produkts aussenden, wobei die Spots dieser Strahlen (14) imstande sind, die Gesamtheit der zu dekapierenden Oberfläche abzudecken aufgrund von Systemen zum optischen und/oder mechanischen Abtasten, welche die Spots der Strahlen (14) auf der Oberfläche des Produkts verlagern, oder eines optischen Systems, welches die Spots zu Linien transformiert, und **dadurch gekennzeichnet, dass** sie aufweist:
- wenigstens einen ersten Laser (6) mit einer Wellenlänge, die gleich jener der Laser (13, 17) ist, die für das Dekapieren verwendet werden, oder bevorzugt eine Gruppe solcher ersten Laser (6), die jeweils einen Strahl (7) aussenden, der an der oxidierten Oberfläche des zu dekapierenden Produkts reflektiert wird, und Sensoren (8), welche die von der oxidierten Oberfläche reflektierten Strahlen (9) auffangen und die Informationen, die sie sammeln, in eine Verarbeitungseinheit (10) senden,
- eine Verarbeitungseinheit (10), welche die Absorption des Strahls (7) durch die Oberfläche des Produkts berechnet ausgehend von den von den Sensoren (8) gesammelten Informationen und welche daraus das Emissionsvermögen der oxidierten Fläche des Metallprodukts ableitet und dieses Emissionsvermögen in Korrelation bringt mit Referenzinformationen, die in der Verarbeitungseinheit (10) voraufgezeichnet sind,
- eine Steuereinheit (15), welche den oder die zweiten Laser steuert und Informationen empfängt, die von der Verarbeitungseinheit (10) geliefert werden, es erlaubend, die Funktionsparameter zu ermitteln, die auf die zweiten Laser anzuwenden sind zum Erzielen des Dekapierens der Oberfläche des Produkts, mittels Vergleichens mit experimentellen Ergebnissen, die ein der Steuereinheit (15) voraufgezeichnet sind, und welche die zweiten Laser (13) steuert, indem sie die besagten Funktionsparameter auf diese anwendet,
- und Mittel zum Inspizieren der dekapierten Oberfläche des Produkts, welche die Effizienz des Dekapierens verifizieren durch Detektieren des eventuellen Fortbestands von nicht dekapierten oder schlecht dekapierten Bereichen.

12. Einrichtung zum Laserdekapieren gemäß Anspruch 11, **dadurch kennzeichnet, dass** die besagten Mittel zum Inspizieren der dekapierten Oberfläche des Produkts optische Mittel (16) sind.

13. Einrichtung zum Laserdekapieren gemäß Anspruch 11 oder 12, **dadurch gekennzeichnet, dass** sie aufweist Mittel zum Abführen der dekapierten Oxide von der Oberfläche des Produkts, zum Beispiel mittels Absaugens und/oder Abbürstens.

14. Einrichtung zum Laserdekapieren gemäß einem der Ansprüche 11 bis 13, **dadurch gekennzeichnet, dass** sie aufweist Mittel zum Durchführen eines komplementären Dekapierens, die den Mitteln zum Inspizieren der dekapierten Oberfläche des Produkts nachgeschaltet sind.

15. Einrichtung zum Laserdekapieren gemäß Anspruch 14, **dadurch gekennzeichnet, dass** die Mittel zum Durchführen eines komplementären Dekapierens aufweisen wenigstens einen dritten Laser (17) oder eine Gruppe solcher dritten Laser (17), die nach den Informationen arbeiten, die von den Mitteln zur Inspektion der Oberfläche geliefert werden.

16. Einrichtung zum Laserdekapieren gemäß Anspruch 14 oder 15, **dadurch gekennzeichnet, dass** die Mittel zum Durchführen eines komplementären Dekapierens aufweisen wenigstens ein Bad zum chemischen (22) oder elektrolytischen Dekapieren (21).

17. Einrichtung zum Laserdekapieren gemäß einem der Ansprüche 1 bis 16, **dadurch gekennzeichnet, dass** sie auf einer durchgehenden Behandlungslinie angeordnet ist, die auch einen Ofen (5) aufweist, der vor der besagten Einrichtung zum Laserdekapieren angeordnet ist.

18. Einrichtung zum Laserdekapieren gemäß Anspruch 17, **dadurch gekennzeichnet, dass** die besagte durchgehende Linie eine Einrichtung zum Walzen des Metallprodukts aufweist.

19. Einrichtung zum Laserdekapieren gemäß einem der Ansprüche 11 bis 18, **dadurch gekennzeichnet, dass** sie zum Behandeln der beiden Seiten des Metallprodukts, welches besteht aus einem Band (3) oder einem Blech im Durchlauf, beiderseits des Produkts aufweist wenigstens einen ersten Laser (6), wenigstens einen zweiten Laser (13) und Mittel zum Inspizieren jeder Oberfläche des Produkts.

20. Einrichtung zum Laserdekapieren gemäß einem der Ansprüche 11 bis 18, **dadurch gekennzeichnet, dass** sie zum Behandeln der Gesamtheit der Oberfläche des besagten Metallprodukts, welches besteht aus einer Stange, einem Rohr oder einem Draht, aufweist, verteilt benachbart zum Umfang des Metallprodukts, eine Gruppe von ersten Lasern (6), eine Gruppe von zweiten Lasern (13) und Mittel zum Inspizieren der gesamten Oberfläche des besagten Produkts.

## Claims

1. A method for laser descaling of a moving metal product having an oxide layer on its surface, said method using laser descaling, **characterized in that**:
- at least a first laser (6) with a wavelength equal to that of the lasers (13, 17) used for the descaling, or preferably a group of such first lasers (6), each send a ray (7) that is reflected on the oxidized surface of the product to be descaled, said rays (9) reflected by the oxidized surface being intercepted by sensors (8) that send the information they collect into a processing unit (10);
- a processing unit (10) calculates the absorption of the ray (7) by the surface of the product, from information collected by the sensors (8), deduces the emissivity of the oxidized surface of the metal product therefrom in the direction of said reflected rays (9), and correlates this emissivity with reference information prerecorded inside processing unit (10);
- at least one second laser (13), or preferably a group of such second lasers (13), each send pulses of a ray (14) onto the surface of the product to descale it, the spots of said pulses of said rays (14) covering the entire surface to be descaled using optical and/or mechanical scanning laterally moving the spots of the rays (14) on the surface of the product, or an optical system transforming the spots into lines, said second laser(s) being controlled by a control unit (15) receiving information provided by the processing unit (10) making it possible to determine the operating parameters to be imposed on said second lasers (13) to obtain the descaling of the surface of the product, compared with experimental results prerecorded in the control unit (15);
- and means for inspecting the descaled surface of the product verifying the effectiveness of the descaling by detecting any persistence of areas that have not been descaled, or that have been descaled poorly.

2. The method according to claim 1, **characterized in that** the fluence of the spot of each pulse of said at least one second laser (13) is comprised between 1 and 20 J/cm².

3. The method according to claim 1 or 2, **characterized in that** the information prerecorded in the processing unit (10) includes the composition of the product and the roughness, measured or estimated, of its surface.

4. The method according to one of claims 1 to 3, **characterized in that** after the descaling and before the inspection of the surface, the descaled oxides are discharged from the surface of the product, for example by suction and/or brushing.

5. The method according to one of claims 1 to 4, **characterized in that** after inspecting the surface of the product, additional descaling of the product is performed, at least in the areas for which the inspection has shown that the descaling by the second laser(s) (13) was insufficient.

6. The method according to claim 5, **characterized in that** said additional descaling is carried out by at least one third laser (17) or a group of such third lasers (17), according to information provided by said surface inspection means.

7. The method according to claim 6, **characterized in that** second inspection means, such as optical means (19), are used to verify the effectiveness of said additional descaling.

8. The method according to claim 6 or 7, **characterized in that** the product, after the additional descaling and optionally the detection of areas imperfectly descaled by the second inspection means, is sent into at least one chemical (22) or electrolytic (21) pickling bath.

9. The method according to claim 5, **characterized in that** said additional descaling is done using at least one chemical (22) or electrolytic (21) pickling bath.

10. The method according to one of claims 1 to 9, **characterized in that** said moving metal product is a strip or a sheet, and **in that** it is descaled on both faces of said strip or sheet.

11. A device for laser descaling of a moving metal product, including at least one second laser (13), or a group of such second lasers (13), that each send a ray (14) onto the surface of the product to descale it, the spots of said rays (14) being able to cover the entire surface to be descaled using optical and/or mechanical scanning systems laterally moving the spots of the rays (14) on the surface of the product, or an optical system and transforming the spots into lines, and **characterized in that** it includes:
- at least one first laser (6) with a wavelength equal to that of the lasers (13, 17) used for the descaling, or preferably a group of such first lasers (6), each sending a ray (7) that is reflected on the oxidized surface of the product to be descaled, and sensors (8) that intercept the rays (9) reflected by said oxidized surface and send the information they collect into a processing unit (10);
- a processing unit (10) that calculates the absorption of the ray (7) by the surface of the product, from information collected by the sensors (8), and that deduces the emissivity of the oxidized surface of the metal product, and correlates this emissivity with reference information prerecorded inside processing unit (10);
- a control unit (15) controlling said second laser(s) and receiving information provided by the processing unit (10) making it possible to determine the operating parameters to be imposed on said second lasers (13) to obtain the descaling of the surface of the product, compared with experimental results prerecorded in the control unit (15), and controlling said second lasers (13) by imposing said operating parameters on them;
- and means for inspecting the descaled surface of the product verifying the effectiveness of the descaling by detecting any persistence of areas that have not been descaled, or that have been descaled poorly.

12. The laser descaling device according to claim 11, **characterized in that** said means for inspecting the descaled surface of the product are optical means (16).

13. The laser descaling device according to claim 11 or 12, **characterized in that** it includes means for discharging the descaled oxides from the surface of the product, for example by suction and/or brushing.

14. The laser descaling device according to one of claims 11 to 13, **characterized in that** it includes means for performing additional descaling placed downstream from said means for inspecting the descaled surface of the product.

15. The laser descaling device according to claim 14, **characterized in that** said means for performing additional descaling include at least one third laser (17) or a group of such third lasers (17), operating according to information provided by said means for inspecting the surface.

16. The laser descaling method according to claim 14 or 15, **characterized in that** said means for performing additional descaling may include at least one chemical (22) or electrolytic (21) pickling bath.

17. The laser descaling device according to one of claims 1 to 16, **characterized in that** it is placed on a continuous treatment line also including a furnace (5) placed before said laser descaling device.

18. The laser descaling device according to claim 17, **characterized in that** said continuous line includes a rolling device for the metal product.

19. The laser descaling device according to one of claims 11 to 18, **characterized in that**, to treat both faces of said metal product, which consists of a moving strip (3) or sheet, it includes, on either side of said product, at least one first laser (6), at least one second laser (13), and means for inspecting each surface of said product.

20. The laser descaling device according to one of claims 11 to 18, **characterized in that**, to treat the entire surface of said metal product, which consists of a bar, a tube or a wire, it includes, distributed near the periphery of said metal products, a group of first lasers (6), a group of second lasers (13), and means for inspecting the entire surface of said product.
